# EUROPÄISCHE PATENTANMELDUNG

(11) **EP 4 512 664 A1**
(43) Veröffentlichungstag der Anmeldung: **26.02.2025**
(21) Anmeldenummer: 24193594.9
(22) Anmeldetag: 08.08.2024
(51) Int. Cl.: B60P 7/08, B60P 7/04

(54) **SICHERUNGSNETZ UND VERFAHREN ZUM ANBRINGEN EINES SICHERUNGSNETZES**

(30) Priorität: 16.08.2023 DE 202023104632 U
(71) Anmelder: Reichert, Werner, 93049 Regensburg (DE)
(72) Erfinder: SCHAMBECK, Josef-Michael, 94365 Parkstetten (DE)
(74) Vertreter: Reichert & Lindner Partnerschaft Patentanwälte

(57) **Zusammenfassung**

Die Erfindung offenbart ein Sicherungsnetz (1) für ein abzudeckendes Objekt (2) und ein Verfahren zur Anbringung des Sicherungsnetzes (1) auf einer Beladung auf dem abzudeckenden Objekt (2). Jeweils ein Endprofil (3) ist im Bereich eines ersten Endes (11) und eines zweiten Endes (12) des Sicherungsnetzes (1) mit den Maschen (13) des Sicherungsnetzes (1) verbunden. Ein Zwischenprofil (5), das kürzer ist als die Profile (3) am ersten Ende (11) und am zweiten Ende (12), ist mit den Maschen (13) des Sicherungsnetzes (1) verbunden. Ein Tragegriff (19) am Zwischenprofil (5) dient zum Tarnsport des in einer Transport- oder Aufbewahrungsposition befindlichen Sicherungsnetzes (1).

## Beschreibung

Die Erfindung betrifft ein Sicherungsnetz für ein abzudeckendes Objekt. Das Sicherungsnetz umfasst eine Vielzahl von Maschen, die das Sicherungsnetz mit einer Länge und einer Breite definieren.

Ferner betrifft die Erfindung ein Verfahren zur Anbringung eines Sicherungsnetzes auf einer Beladung auf einem abzudeckenden Objekt.

Das deutsche Gebrauchsmuster DE 298 06 911 U1 betrifft ein Expander-Container-Sicherungsnetz, das z.B. über Container gespannt und entfernt werden kann. Durch einen Expander kann das Expander-Container- Sicherungsnetz über verschiedene Containergrößen gespannt werden.

Das deutsche Gebrauchsmuster DE 20 2015 000 565 U1 beschreibt ein Sicherungsnetz für Schubkarren, um die Ladung bei einer Schubkarre während des Transportes zu sichern. Das Sicherungsnetz kann in einer Aufbewahrungsvorrichtung untergebracht werden, die einseitig fest an dem Schubkarren installiert ist.

Aufgabe der Erfindung ist, ein Sicherungsnetz bereitzustellen, das schnell, zuverlässig und einfach von einer Person auf dem abzudeckenden Objekt angebracht werden kann.

Diese Aufgabe wird durch ein gattungsgemäßes Sicherungsnetz gelöst, das die Merkmale des Anspruchs 1 umfasst.

Eine weitere Aufgabe der Erfindung ist, ein Verfahren zum Anbringen und Abnehmen eines Sicherungsnetzes von einer Beladung auf einem abzudeckenden Objekt bereitzustellen, damit das Sicherungsnetz einfach, schnell und zuverlässig auf der Beladung angebracht und von der Beladung auf dem abzudeckenden Objekt abgenommen werden kann.

Diese Aufgabe wird durch ein gattungsgemäßes Verfahren gelöst, das die Merkmale des Schutzanspruchs 1 umfasst.

Gemäß einer möglichen Ausführungsform ist jeweils ein Endprofil an einem ersten Ende und an einem zweiten Ende in die Maschen des Sicherungsnetzes eingeschoben. Jedes Endprofil ist zumindest über zwei gegenüberliegende Befestigungen mit entsprechenden Maschen des Sicherungsnetzes verbunden. Ein Zwischenprofil, das kürzer ist als die Endprofile am ersten Ende und am zweiten Ende des Sicherungsnetzes, ist ebenfalls in die Maschen des Sicherungsnetzes eingeschoben. Das Zwischenprofil ist zumindest über zwei gegenüberliegende Befestigungen mit den Maschen des Sicherungsnetzes verbunden.

Der Vorteil des erfindungsgemäßen Sicherungsnetzes ist, dass dieses schnell, einfach und sicher von einer Person auf der Beladung (Transportgut, das gesichert werden muss) auf dem abzudeckenden Objekt aufgebracht und abgenommen werden kann. Dabei ist das abzudeckende Objekt nicht alleine auf Anhänger beschränkt. Es ist für einen Fachmann selbstverständlich, dass abzudeckende Objekt jegliches Behältnis, wie z.B. Anhänger (jeglicher Art), Containermulde, offene Bauschuttcontainer, etc.) umfassen kann, damit die Beladung entsprechend während des Transports gesichert ist.

Gemäß einer bevorzugten Ausführungsform sind die zumindest zwei gegenüberliegenden Befestigungen für jedes Endprofil und für das Zwischenprofil gegenüber den freien Enden der Endprofile und gegenüber den freien Enden des Zwischenprofil vorgesehen.

Diese Art der Befestigung hat den Vorteil, dass das Sicherungsnetz zwischen den Befestigungen an den Endprofilen und dem Zwischenprofil eine gewisse Beweglichkeit besitzt, so dass eine bessere Anpassung an die Beladung möglich ist.

Gemäß einer weiteren Ausführungsform ist am Zwischenprofil ein Tragegriff befestigt ist, der zum Tragen des Sicherungsnetzes dient. Der Tragegriff dient zu Tragen des Sicherungsnetzes, wenn dieses mittels der Profile aufgerollt ist. Um das Zwischenprofil im aufgerollten Zustand zu sichern, besitz das Zwischenprofil mindestens zwei Transportsicherungsriemen. Die Transportsicherungsriemen dienen dazu das Sicherungsnetz in einer Transport- oder Aufbewahrungsposition sichern. Ein weiterer Vorteil des Tragegriffs ist, dass dieser die Orientierung vorgibt, wie das Sicherungsnetz auf die Beladung aufgelegt werden muss. Das Sicherungsnetz ist immer derart aufzulegen, dass der Tragegriff zur Beladung weist. Anschließend wird das Sicherungsnetz mittels der Profile über der Beladung ausgerollt.

Wenn das Sicherungsnetz von dem abzudeckenden Objekt abgenommen werden soll, werden die Profile an den Enden des Sicherungsnetzes zum Zwischenprofil hin gerollt. Mit den Transportsicherungsriemen am Zwischenprofil werden die beiden Rollen des Sicherungsnetzes gesichert. Das Sicherungsnetz lässt sich mit dem Trageriemen einfach und sicher tragen. Ebenso kann das mit den Transportsicherungsriemen gesicherte Abdecknetz sicher aufbewahrt werden.

Gemäß einer weiteren vorteilhaften Ausführungsform ist das Zwischenprofil einteilig ausgebildet.

Gemäß einer noch weiteren vorteilhaften Ausführungsform ist das Zwischenprofil zweiteilig ausgebildet. Beide Teile des Zwischenprofils sind über ein Scharniergelenk miteinander verbunden. Der Tragegriff ist gegenüber dem Scharniergelenk vorgesehen.

Gemäß einer vorteilhaften Ausgestaltung der Erfindung erfolgen die Befestigungen an den Endprofilen und dem Zwischenprofil mit den Strängen der Maschen, die sich entlang der Länge des Sicherungsnetzes erstrecken, derart, dass die Befestigungen klemmend mit den Endprofilen und dem Zwischenprofil zusammenwirken. Ebenso ist es denkbar, dass die Befestigungen an den Endprofilen und des Zwischenprofils mit den Strängen der Maschen zusammenwirken, die sich entlang der Breite des Sicherungsnetzes erstrecken.

Die Verbindung der Profile und des Zwischenprofils über die Befestigungen mit den Strängen der Maschen, die in Richtung der Länge des Sicherungsnetzes oder den Strängen der Maschen, die in Richtung der Breite des Sicherungsnetzes verlaufen, kann fest und unbeweglich oder beweglich sein. Bei einer beweglichen Verbindung kann sich das Profil und/oder das Zwischenprofil innerhalb einer Masche in Richtung der Stränge entlang der Länge des Sicherungsnetzes oder innerhalb einer Masche in Richtung der Stränge entlang der Breite des Sicherungsnetzes bewegen.

Die Sicherungsnetze auch Ladungssicherungsnetze genannt dienen der Sicherung von Ladegut. Um Ladegut ordnungsgemäß zu sichern, sind die Sicherungsnetze, (Ladungssicherungsnetze) flexibel und reißfest ausgebildet und werden immer beliebter .Die Sicherungsnetze bzw. Ladungssicherungsnetze sind für offene Ladeflächen von Anhängern, Container oder Behälter von Fahrzeugen konzipiert und eignen sich zum Sichern von losen Produkten wie Grünschnitt, Papier, Bauschutt, Holz in jeglicher Form oder anderen losen Kleinteilen.

Die Sicherungsnetze zur Ladungssicherung gibt es in verschiedenen Maschenweiten, die nach dem zu sichernden Ladegut ausgewählt werden müssen. Außerdem gibt es die Sicherungsnetze in verschiedenen Größen (Standardgrößen) für die verschiedenen Behältnisse.

Die Sicherungsnetze können ohne oder mit zusätzlich eingezogener Spannleine (Gummispannleine, elastische Schnur) versehen sein, um das Abdecknetz am abzudeckenden Objekt zu fixieren.

Gemäß einer weiteren Ausführungsform sind entlang der Länge und der Breite des Sicherungsnetzes mehrere Fixierungshaken angebracht, die zur sicheren Festlegung des Sicherungsnetzes am Anhänger oder Transportbehältnis dienen. Hierzu sind elastische Elemente vorgesehen, mit denen die Fixierungshaken am abzudeckenden Objekt gesichert bzw. gehaltert werden können.

Gemäß einer vorteilhaften Ausgestaltung der Erfindung zeichnet sich das Verfahren zur Anbringung eines Sicherungsnetzes auf einer Beladung auf einem abzudeckenden Objekt dadurch aus, dass zunächst die mindestens zwei Transportsicherungsriemen des in einer Transport- oder Aufbewahrungsposition befindlichen Sicherungsnetzes gelöst werden. Das Sicherungsnetze wird dann etwa mittig zur Beladung des abzudeckenden Objekts aufgelegt, wobei der Tragegriff des Zwischenprofils zur Beladung hinweist. Anschließend, erfolgt nacheinander das Ausrollen der beiden Endprofile zu einem ersten Ende und einem zweiten Ende des abzudeckenden Objekts hin. Abschließend erfolgt das Sichern des ausgerollten Sicherungsnetzes am abzudeckenden Objekt, wobei eine elastischen Schnur des Sicherungsnetzes mit mehreren Sicherungselementen verbunden wird. Ebenso ist es möglich, dass das abzudeckende Objekt durch Verbinden mehrerer Fixierungshaken, die entlang der Länge und der Breite des Sicherungsnetzes verteilt sind, über elastische Elemente mit dem abzudeckenden Objekt selbst verbunden werden.

Anhand der beigefügten Zeichnungen werden nun die Erfindung und ihre Vorteile durch Ausführungsbeispiele näher erläutert, ohne dadurch die Erfindung auf das gezeigte Ausführungsbeispiel zu beschränken. Die Größenverhältnisse in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
**Figur 1** zeigt eine Draufsicht auf eine Ausführungsform des erfindungsgemäßen Abdecknetzes.
**Figur 2** zeigt eine Draufsicht auf eine weitere Ausführungsform des erfindungsgemäßen Abdecknetzes.
**Figur 3** zeigt eine Stirnansicht auf den in Fig. 1 mit X gekennzeichneten Bereich des erfindungsgemäßen Abdecknetzes.
**Figur 4** zeigt eine Ansicht von unten des mit dem Abdecksystems verbundenen Zwischenprofils.
**Figur 5** zeigt eine Seitenansicht des Abdecknetzes im aufgerollten und gesicherten Zustand.
**Figur 6A** zeigt eine Seitenansicht einer Ausführungsform des Zwischenprofils, das zweigeteilt ist.
**Figur 6B** zeigt die Seitenansicht des Zwischenprofils aus Fig. 6A, bei der die beiden Teile des Zwischenprofils um das Scharniergelenk geschwenkt sind.
**Figur 7** zeigt das erfindungsgemäße Abdecknetz in einer Gebrauchsstellung, das auf einem Anhänger angebracht ist.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die Figuren stellen lediglich Ausführungsbeispiele der Erfindung dar, ohne jedoch die Erfindung auf die dargestellten Ausführungsbeispiele zu beschränken.

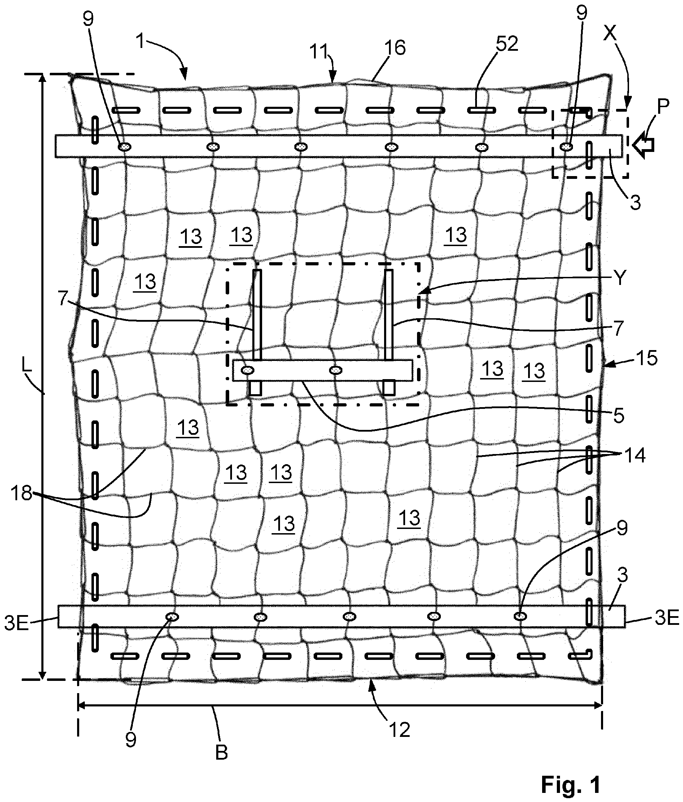

**Figur 1** zeigt eine Draufsicht auf ein ausgerolltes Sicherungsnetz 1 für die Sicherung von Gegenständen auf einem abzudeckenden Objekt 2, wie z.B. einem Anhänger oder einem offenen Container. Das abzudeckende Objekt 2 ist bei der hier beschrieben Ausführungsform ein Anhänger 50 sein. Das abgerollte Sicherungsnetz mit einer Breite B und einer Länge L definiert ein erstes Ende 11 und ein zweites Ende 12. Im Bereich des ersten Endes 11 und des zweiten Endes 12 ist das Sicherungsnetz 1 jeweils mit einem Profil 3 versehen, das an einigen Stellen mit dem Sicherungsnetz 1 verbunden ist. Ein Zwischenprofil 5, das kürzer ist als die beiden Profile 3 ist zwischen den beiden Profilen 3 am Sicherungsnetz 1 angebracht. Die beiden Profile 3 und das Zwischenprofil 5 sind mit dem Sicherungsnetz 1 verbunden. Die Befestigung der beiden Profile 3 und/oder des Zwischenprofils 5 kann derart ausgestaltet sein, dass sich die Profile 3 und/oder das Zwischenprofil 5 entlang der Stränge 14 innerhalb einer Masche 13 in Richtung der Länge L bewegen können.

Gemäß einer weiteren Ausführungsform der Erfindung sind die am ersten Ende 11 und am zweiten Ende 12 vorgesehenen Profile 3 und das Zwischenprofil 5 über Befestigungen 9 an Strängen 18 der Maschen 13, die sich entlang der Breite B des Sicherungsnetzes 1 erstrecken, befestigt. Die Befestigung der beiden Profile 3 und/oder des Zwischenprofils 5 kann derart ausgestaltet sein, dass sich Profile 3 und/oder das Zwischenprofil 5 entlang der Stränge 18 innerhalb einer Masche 13 in Richtung der Breite B bewegen können.

Das Zwischenprofil 5 ist mit mindestens zwei Transportsicherungsriemen 7 versehen, die zur Bündelung des Sicherungsnetzes 1 dienen, wenn dasselbe durch die beiden Profile 3 in Richtung zum Zwischenprofil 5 hin aufgerollt ist.

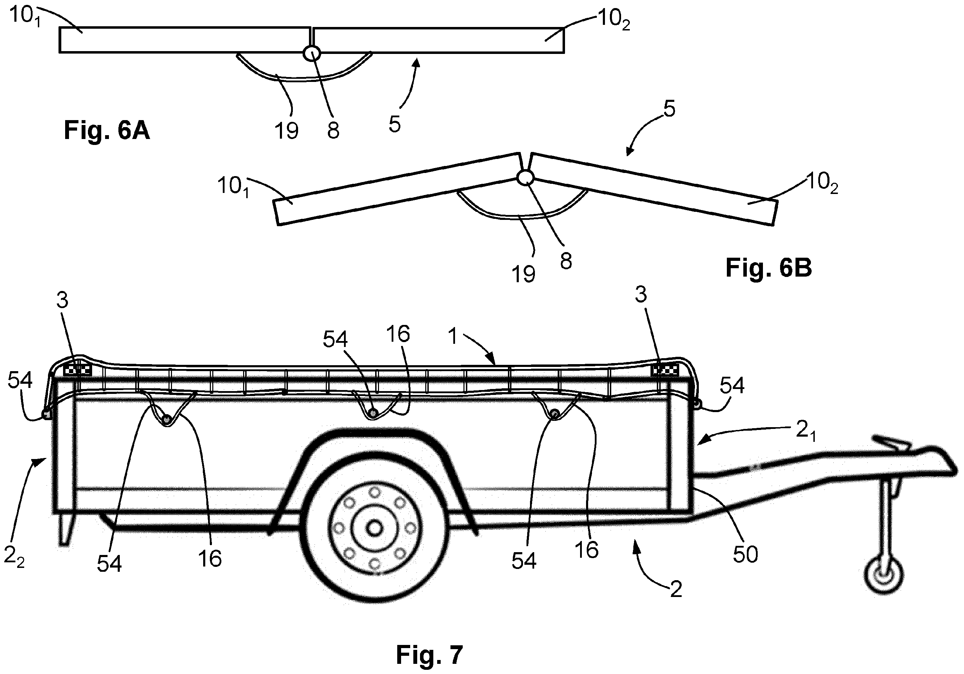

Bei der in Fig. 1 dargestellten Ausführungsform des Sicherungsnetzes 1 ist der umlaufende Rand 15 mit einer elastischen Schnur 16 versehen, die zur Befestigung und Spannung an entsprechenden Sicherungselementen 54 (siehe Fig. 6) am abzudeckenden Objekt 2 (z.B. Anhänger 50 in Fig. 6) dient. Wenn das Sicherungsnetz 1, wie in Fig. 6 dargestellt, auf dem abzudeckenden Objekt 2 aufgebracht ist, liegen die Profile 3 des Sicherungsnetzes am Umriss 52 (gestrichelt dargestellt) des Anhängers 50 auf.

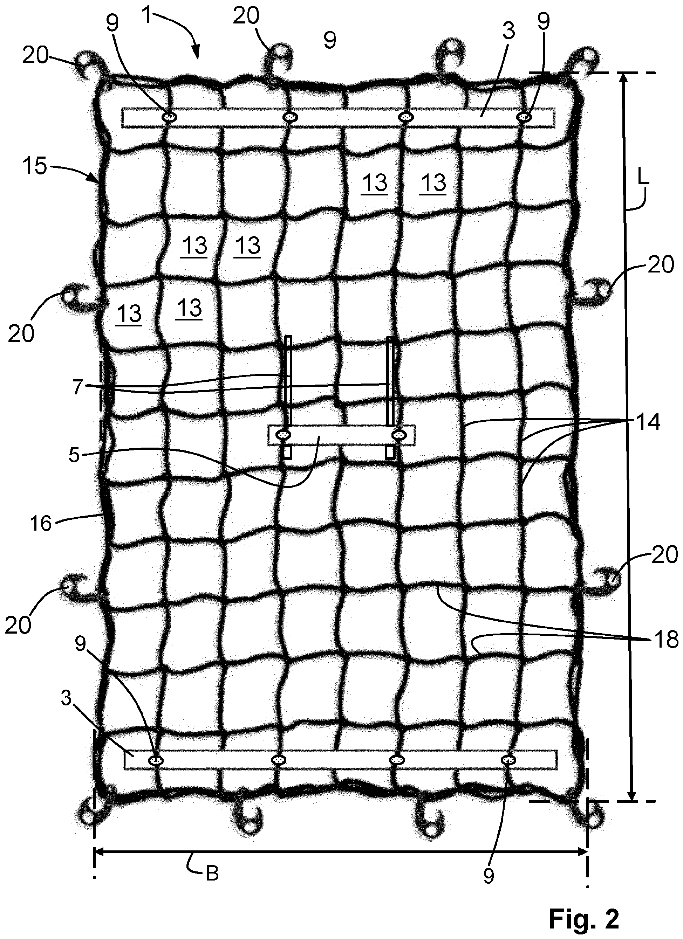

**Figur 2** zeigt eine Draufsicht auf eine weitere Ausführungsform des ausgerollten Sicherungsnetzes 1. Das hier dargestellte Sicherungsnetz 1 ist im Wesentlichen identisch mit in Figur 1 beschriebenen Sicherungsnetz 1, so dass, um die Beschreibung nicht unnötig aufzublähen, nicht noch einmal alle Merkmale beschrieben werden. Bei der hier dargestellten Ausführungsform des Sicherungsnetzes 1 sind am umlaufenden Rand 15 mehrere Fixierungshaken 20 angebracht, mit denen das Sicherungsnetz 1, wie in der Beschreibung zu Fig. 1 erwähnt z.B. an einem Anhänger 50 lösbar angebracht werden kann. Die Profile 3 am ersten Ende 11 und am zweiten Ende 12 und das Zwischenprofil 5 sind, wie bereits beschrieben, in der gleichen Art und Weise an den Strängen 14 bzw. den Strängen 18 der Maschen 13 des Sicherungsnetzes 1 befestigt.

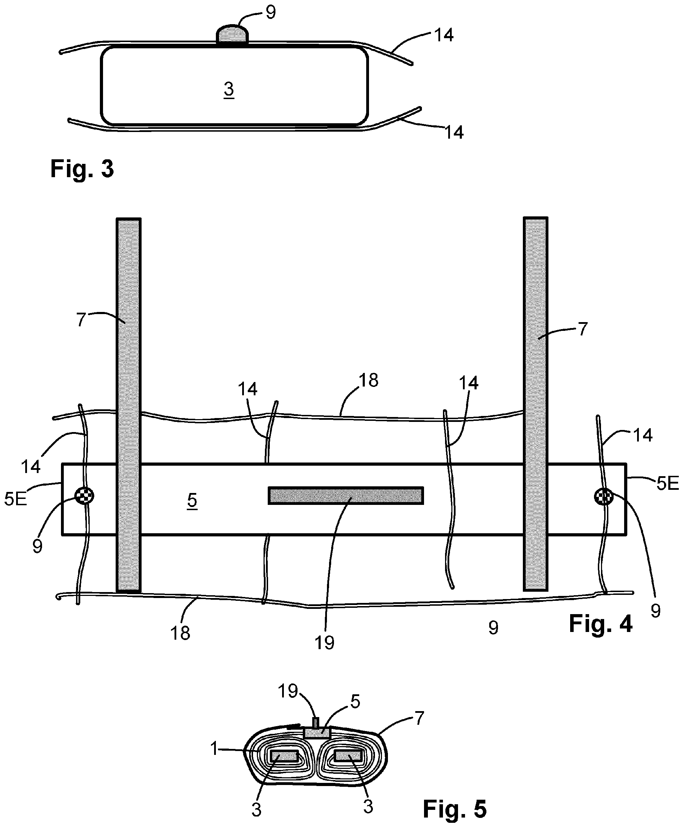

**Figur 3** zeigt eine Seitenansicht entlang des Pfeils P des Bereichs X in Fig 1. Das Profil 3 ist bei der hier dargestellten Ausführung derart in das Sicherungsnetz 1 eingefügt, dass die Stränge 14 der Maschen 13 (siehe Fig. 1 oder 2) abwechselnd oberhalb und unterhalb des Profils 3 geführt sind. Bevorzugt ist sind die Stränge 14 nur an den Enden der Profile 3, mit diesem jeweils über eine Befestigung 9 klemmend verbunden. Ebenso wäre es denkbar, dass jeder Strang 14 mit einer Befestigung 9 fest oder beweglich mit dem Profil 3 verbunden werden kann.

**Figur 4** zeigt eine Rückansicht des in Fig 1 mit Y gekennzeichneten Bereichs. Auch hier sind die Stränge 14 abwechselnd oberhalb und unterhalb des Zwischenprofils 5 geführt. An einer Seite des Zwischenprofils 5 ist dieses mit einem Tragegriff 19 und mindesten zwei Transportsicherungsriemen 7 versehen. Die Transportsicherungsriemen 7 dienen, wie bei der in **Figur 5** gezeigten Transport- bzw. Aufbewahrungsstellung, dazu das aufgerollte Sicherungsnetz 1 für den sicheren und bequemen Transport mit dem Tragegriff 19 zu bündeln. Die Transport- bzw. Aufbewahrungsstellung wird dadurch erreicht, dass beim Abnehmen des Sicherungsnetzes 1 vom abzudeckenden Objekt 2 (wie z.B. ein Anhänger 50) mit den Profilen 3 das Sicherungsnetz 1 zum Zwischenprofil 5 hin aufgerollt wird. Das so aufgerollte Sicherungsnetz 1 wird gedreht, so dass der Tragegriff 19 und die Transportsicherungsriemen 7 von oben her zugänglich sind. Die Transportsicherungsriemen 7 werden geschlossen, um das Sicherungsnetz 1 zu bündeln. Das so gebündelte Sicherungsnetz 1 kann mit dem Tragegriff 19 einfach und sicher transportiert werden. Auch ist durch die Bündelung eine geordnete Aufbewahrung des Sicherungsnetzes 1 möglich.

**Figur 6A** zeigt eine Ausführungsform des Zwischenprofils 5, das aus einem ersten Teil 10₁ und einem zweiten Teil 10₂ besteht. Der erste Teil 10₁ und der zweite Teil 10₂ sind über ein Scharniergelenk 8 schwenkbar miteinander verbunden. Der Tragegriff 19 übergreift das Scharniergelenk 8.

**Figur 6B** zeigt die Ausführungsform des Zwischenprofils 5 aus Fig. 6A, wobei der erste Teil 10₁ und der zweite Teil 10₂ um das Scharniergelenk 8 geschwenkt sind. Das Zwischenprofil kommt bei einem beladenen Anhänger 50 etwa in der Mitte der Ladefläche zu liegen. Das Zwischenprofil 5 des Sicherungsnetzes 1 liegt mit der Seite des Tragegriffs 19 auf der Beladung auf. Durch die Schwenkung liegt das Zwischenprofil 5 und somit auch das Sicherungsnetz 1 auf der Beladung auf.

**Figur 7** zeigt eine Seitenansicht eines Anhängers 50 (Transportbehältnis), der ein mögliches abzudeckendes Objekt 2 mit Beladung (hier nicht dargestellt) sein kann. Die Ladefläche des Anhängers 50 ist mit dem erfindungsgemäßen Sicherungsnetz 1 abgedeckt. Das Sicherungsnetz 1 dient zur Sicherung der losen Gegenstände, die mit dem Anhänger 50 transportiert werden sollen. Zum leichteren und einfachen Anbringen des Sicherungsnetzes 1 und dem Abnehmen des Sicherungsnetzes 1 von dem Anhänger 50 sind im Bereich des ersten Endes 11 und des zweiten Endes 12 des Sicherungsnetzes 1 jeweils Profile 3 vorgesehen und mit dem Abdecknetz 1 verbunden sind.

Die Profile 3 liegen an gegenüberliegenden Enden des Anhängers 50 auf und das Sicherungsnetz 1 überspannt die gesamte Ladefläche des Anhängers 50. Bei der hier dargestellten Ausführungsform besitzt der Anhänger 50 mehrere Sicherungselemente 54, die zur sicheren Festlegung des Sicherungsnetzes 1 am Anhänger 50 dient. Mit den Sicherungselementen 54 wirkt in diesem Fall die elastische Schnur 16 zusammen die am Rand 15 (siehe Fig. 1 und 2) des Sicherungsnetzes 1 vorgesehen ist.

Es wird angenommen, dass die vorliegende Offenbarung und viele der darin erwähnten Vorteile durch die vorhergehende Beschreibung verständlich werden. Es ist offensichtlich, dass verschiedene Änderungen in Form, Konstruktion und Anordnung der Bauteile durchgeführt werden können, ohne von dem offenbarten Gegenstand abzuweichen. Die beschriebene Form ist lediglich erklärend, und es ist die Absicht der beigefügten Schutzansprüche, solche Änderungen zu umfassen und einzuschließen. Dementsprechend sollte der Umfang der Erfindung nur durch die beigefügten Schutzansprüche beschränkt sein.

### BEZUGSZEICHENLISTE

- 1: Sicherungsnetz
- 2: Abzudeckendes Objekt
- 2₁: erstes Ende
- 2₂: zweites Ende
- 3: Endprofil
- 3E: freies Ende
- 5: Zwischenprofil
- 5E: freies Ende
- 6: Teil des Zwischenprofils
- 7: Transportsicherungsriemen
- 8: Scharniergelenk
- 9: Befestigung
- 10₁: erstes Teil
- 10₂: zweites Teil
- 11: erstes Ende
- 12: zweites Ende
- 13: Masche
- 14: Strang
- 15: Rand
- 16: elastische Schnur
- 18: Strang
- 19: Tragegriff
- 20: Fixierungshaken
- 50: Anhänger
- 52: Umriss
- 54: Sicherungselementen
- B: Breite
- L: Länge
- P: Pfeil
- X: Bereich
- Y: Bereich

## Patentansprüche

1. Ein Sicherungsnetz (1) für ein abzudeckendes Objekt (2), umfassend:
eine Vielzahl von Maschen (13), die das Sicherungsnetz (1) mit einer Länge (L) und einer Breite (B) definieren;
**dadurch gekennzeichnet, dass**
jeweils ein Endprofil (3), das im Bereich eines ersten Endes (11) und eines zweiten Endes (12) in die Maschen (13) des Sicherungsnetzes (1) eingeschoben ist;
jedes Endprofil (3) zumindest über zwei gegenüberliegende Befestigungen (9) mit entsprechenden Maschen (13) des Sicherungsnetzes (1) verbunden ist;
ein Zwischenprofil (5) zwischen den beiden Endprofilen (3) in die Maschen (13) des Sicherungsnetzes (1) eingeschoben ist, wobei das Zwischenprofil (5) kürzer als die Profile (3) am ersten Ende (11) und am zweiten Ende (12) ist; und
das Zwischenprofil (5) zumindest über zwei gegenüberliegende Befestigungen (9) mit den Maschen (13) des Sicherungsnetzes (1) verbunden ist.

2. Sicherungsnetz (1) nach Anspruch 1, wobei die zumindest zwei gegenüberliegenden Befestigungen (9) für jedes Endprofil (3) und für das Zwischenprofil (5) gegenüber den freien Enden (3E) der Endprofile (3) und gegenüber den freien Enden (5E) des Zwischenprofil (5) vorgesehen sind.

3. Sicherungsnetz (1) nach einem der vorangehenden Anspruch 1, wobei am Zwischenprofil (5) ein Tragegriff (19) befestigt ist, der zum Tragen des Sicherungsnetzes (1) dient.

4. Sicherungsnetz (1) nach einem der vorangehenden Ansprüche, wobei das Zwischenprofil (5) mindestens zwei Transportsicherungsriemen (7) angebracht hat, die das Sicherungsnetz (1) in einer Transport- oder Aufbewahrungsposition sichern.

5. Sicherungsnetz (1) nach einem der vorangehenden Ansprüche, wobei das Zwischenprofil (5) einteilig ausgebildet ist

6. Sicherungsnetz (1) nach einem der vorangehenden Ansprüche 1 - 4, wobei das Zwischenprofil (5) zweiteilig ausgebildet ist und beide Teile (10₁, 10₂) des Zwischenprofils (5) über ein Scharniergelenk (8) miteinander verbunden sind.

7. Sicherungsnetz (1) nach Anspruch 5, wobei das Scharniergelenk (8) des Zwischenprofils (5) gegenüber dem Tragegriff (19) vorgesehen ist.

8. Sicherungsnetz (1) nach einen der vorangehenden Ansprüche, wobei die Befestigungen (9) an den Endprofilen (3) und dem Zwischenprofil (5) mit den Strängen (14) der Maschen (13) klemmend zusammenwirken, die sich entlang der Länge (L) des Sicherungsnetzes (1) erstrecken, oder, wobei die Befestigungen (9) an den Endprofilen (3) und des Zwischenprofils (5) mit den Strängen (18) der Maschen (13) klemmend zusammenwirken, die sich entlang der Breite (B) des Sicherungsnetzes (1) erstrecken.

9. Sicherungsnetz (1) nach einem der vorangehenden Ansprüche, wobei entlang der Länge (L) und der Breite (B) des Sicherungsnetzes (1) eine elastische Schnur (16) vorgesehen ist, die zur mehrere Sicherungselemente (54), die zur sicheren Festlegung des Sicherungsnetzes (1) am Anhänger (50) oder Transportbehältnis dienen.

10. Sicherungsnetz (1) nach einem der vorangehenden Ansprüche 1 - 8, wobei entlang der Länge (L) und der Breite (B) des Sicherungsnetzes (1) mehrere Fixierungshaken (20) angebracht sind, die zur sicheren Festlegung des Sicherungsnetzes (1) am Anhänger (50) oder Transportbehältnis dienen.

11. Verfahren zur Anbringung eines Sicherungsnetzes (1) gemäß einem der Ansprüche 1 bis 10 auf einer Beladung auf einem abzudeckenden Objekt (2),
**gekennzeichnet durch** die Schritte:
• Lösen der mindestens zwei Transportsicherungsriemen (7) des in einer Transport- oder Aufbewahrungsposition befindlichen Sicherungsnetzes (1);
• Auflegen des Sicherungsnetzes (1) etwa mittig zur Beladung des abzudeckenden Objekts (2), wobei der Tragegriff (19) des Zwischenprofils (5) zur Beladung hinweist;
• nacheinander Ausrollen der beiden Endprofile (3) zu einem ersten Ende (2₁) und einem zweiten Ende (2₂) des abzudeckenden Objekts (2) hin; und
• Sichern des ausgerollten Sicherungsnetzes (1) abzudeckenden Objekt (2) durch Verbinden einer elastischen Schnur (16) des Sicherungsnetzes (1) mit mehreren Sicherungselementen (54) des abzudeckenden Objekts (2) oder durch Verbinden mehrerer Fixierungshaken (20), die entlang der Länge (L) und der Breite (B) des Sicherungsnetzes (1) verteilt sind, über elastische Elemente mit dem abzudeckenden Objekt (2) selbst.
